## Europäisches Patentamt
## European Patent Office
## Office européen des brevets

(19)

(11) Publication number: **0 030 067**
**A1**

(12)

# EUROPEAN PATENT APPLICATION

(21) Application number: **80301007.3**

(22) Date of filing: **31.03.80**

(51) Int. Cl.³: **B 01 D 11/02**

(30) Priority: **30.11.79 US 99019**

(43) Date of publication of application:
**10.06.81 Bulletin 81/23**

(84) Designated Contracting States:
**AT BE CH DE FR GB IT LU NL SE**

(71) Applicant: **BOARD OF TRUSTEES A Constitutional Corporation Operating Michigan State University**

**East Lansing Michigan(US)**

(72) Inventor: **Cornwell, David Alan**
**4485 Fairlane Drive**
**Okemos, Michigan, 48864(US)**

(74) Representative: **Batchellor, John Robert et al, BATCHELLOR, KIRK & EYLES 2 Pear Tree Court Farringdon Road London EC1R 0DS(GB)**

(54) **Process for the extraction of metal ions.**

(57) In order to extract a metal ion from an aqueous slurry containing a floc of a water-insoluble compound of the metal, the slurry (14), without previously bringing all the metal ions into aqueous solution by acidulation, is contacted with an organic solvent stream (25) in a rotary contactor (15). The aqueous phase and the organic phase pass through the contactor (15) in discrete phases and during their passage are gently intermingled. The two phases are discharged from the contator separately (26 and 27). The organic solvent is stripped of the metal ion (33), is regenerated, and is recycled (34). The raffinate (26) is separated into solids (47), liquid (46) and third phase (43), the last being treated for recovery of entrained organic solvent. The preferred organic solvent is acid alkyl phosphate dissolved in a diluent.

EP 0 030 067 A1

.../...

Fig.1.

1

PROCESS FOR THE EXTRACTION OF METAL IONS

The present invention relates to the extraction of a metal ion from aqueous slurries containing a floc including a substantially water-insoluble metal compound or compounds, and is particularly concerned with the case where the metal compound is a metal hydroxide or a hydroxide-containing metal salt. While the invention is primarily directed to the recovery of aluminium, iron and magnesium used in sulphate form as coagulants in water treatment plants, it is also applicable to other metal compounds and precipitates of a flocculated and hydrated nature, such as copper carbonate and copper hydroxide.

The invention utilises liquid ion exchange for the extraction of the metal ion. There is extensive prior art in the field of liquid ion exchange extraction processes, in which a metal ion is extracted by means of an organic solvent comprising a selective extractant dissolved in an organic diluent which is immiscible with water. In most of those processes, the insoluble metal compound has been wholly brought into aqueous solution by acidulation before ion-exchange occurs.

More than half of the sludge-producing water treatment plants in the United States are turbidity removal plants using aluminium, magnesium and/or iron in the form of sulphates in order to coagulate solids present in the water in finely divided form. The sludge which is so produced is

2

a floc formed largely of water-insoluble hydroxides of the metal or metals used and the coagulated solids. Because of its nature the floc is extremely difficult to dewater and constitutes a major disposal problem.

Turbidity-removal plants account for about 70% of all water treated in the United States. About 25% of the sludge producing plants are water softening plants. These softening plants account for about 25 percent of all water treated. The problem with sludges is similar in other countries.

The need for the elimination of direct sludge discharges has imposed both an economic and a technological problem on the water supply industry. Many facilities have been constructed based on the limited technology available on the characteristics of, and the means for the handling, treatment and disposal of, water plant sludges. In many cases, water plants have been constructed in a manner that will permit the inclusion of modifications for sludge disposal.

Recently sludge processing plants have been constructed in order to avoid direct sludge discharge. Mostly sludge disposal practices involve one or more of the following: (1) co-disposal with sewage sludge at a waste water treatment plant; (2) lagooning with and without natural freezing requiring ultimate disposal of the residue at some future time; (3) mechanical dewatering with landfilling of residue; and (4) deflocculation with

3

coagulant recovery. Mechanical dewatering is expensive, especially for plants with a water treatment capacity of less than 50 million gallons per day. Co-disposal is often not practical since access to a sewer may not be available. Lagooning may be a viable alternative at plants where tracts of inexpensive land are available. However, of all the potential methods of sludge treatment, only coagulant recovery offers the potential of reducing the size of facilities required and providing a lower life cycle cost.

Several processes have been proposed for the recovery of coagulants, particularly alum. One process involves a substantial lowering of the pH to leach the metal ion in a metal hydroxide floc by the addition of acid in the manner described in U.S. Patent No. 3,959,133. In the acid process, sludge, usually from settling basins and filter backwashing, is collected in an equalization tank and subsequently thickened by gravity. The supernatant water from the tank is usually returned to the plant raw water intake. Acid, usually sulphuric acid, is added to the thickened sludge at a concentration determined by the amount of metal hydroxide in the sludge and the desired level of recovery. In general, aluminium recovery in excess of 80 percent can be expected at pH of 2.5 or lower. The dissolved aluminium, in the form of aluminium sulphate (liquid alum), is separated from the residual solids by a gravity separator and returned to storage for reuse while the residual sludge is disposed of by landfilling following

4

neutralization.

The acid process for alum recovery presents a potentially serious problem in that it is vulnerable to the accumulation of certain impurities in the recovered alum. If this occurs, and the recovered alum is used for water treatment, it may cause a degradation of the potable water. The potential impurities include: (1) impurities capable of being converted to a soluble form in the acidulation process such as iron, manganese, chromium, other metals and a wide variety of organic materials; and (2) impurities from impure sulphuric acid. The process is not being used in areas where there could be a problem with impurities for this reason.

The principal prior art in the use of liquid ion exchange for alum recovery is a paper by G.P. Westerhoff and D.A. Cornwell, published at pages 709 to 714 in the Journal of the American Water Works Association (December 1978). In the process there described, precipitated water-insoluble aluminium hydroxide as sludge in water, as derived from the alum treatment of potable water, is acidulated with sulphuric acid to dissolve the hydroxide and form aluminium ions in a strongly acidic solution of pH 2.0 or lower. An organic solvent consisting of a cation-exchange extractant dissolved in a diluent is then used to extract the aluminium ion from the aqueous solution into the organic solvent. The organic solvent is stripped with sulphuric acid to regenerate the extractant and remove the aluminium ion to form liquid alum. The raffinate is neutralized usually with lime. The process requires the acid addition step to render water soluble the metal hydroxides and that step results in significant materials and equipment costs. At page 713 of the paper there is however described an improved process, illustrated in Figure 4 of the paper, in which the metal hydroxide floc is not dissolved by the addition of acid prior to extraction and, instead, the aqueous slurry still including the floc is treated directly with the organic solvent. By the improved process, the expense of acidulation and much of the expense of neutralisation is avoided.

In practice, the process shown in Figure 4 of the Westerhoff and Cornwell paper has disadvantages which detract from its economic viability. Extraction is performed in a mixer-settler which mixes the aqueous and organic phases with high energy input. Because of the vigorous action of the mixer, the mixture settles into three phases - an upper organic phase, which is passed to the stripping circuit for stripping of the metal ion, a lower aqueous phase, which after neutralisation, is discharged to waste, and a third phase containing virtually all the solids in the aqueous phase, some organic solvent and some water, combined in the form of a dispersion which will not separate on standing and which requires expensive and large capacity equipment in the form of centrifuges before the contained organic solvent and water can be

6

removed and the solids made fit for disposal, as by landfilling. The need for high capacity centrifuges or like separating equipment raises both the capital and operating costs of the process to a level which may not be acceptable.

The invention is concerned with a process, as described in the beforementioned paper for extracting a desired metal ion from an aqueous slurry containing a floc of a substantially water-insoluble compound of the metal, in which process extraction is performed by an organic solvent comprising an acidic cationic extractant dissolved in an organic diluent which is substantially water immiscible, and, after the aqueous slurry has been contacted by the organic solvent and a cation of the extractant has been exchanged for the metal ion of the slurry, the organic solvent containing the metal ion is separated and is stripped of the metal ion to regenerate the organic solvent. The invention is characterised in that extraction of the metal ion from the aqueous slurry to the organic solvent is performed in a continuous contactor through which the aqueous slurry and the organic solvent pass in discrete phases, in which gentle intermingling of the phases occurs during their transit through the contactor, and from which the aqueous and organic phases are discharged separately.

Thus, by the invention, extraction occurs with low energy mixing of the aqueous slurry and the organic phase.

7

Unexpectedly, it is found that, by using a contactor as defined, the solids appear in the aqueous phase discharge predominantly in a form which eases their separation from the water. In addition, the amount of the third phase is small and hence little organic solvent is lost from the organic phase, needing recovery by centrifuging or like techniques. The economics of the process are more favourable than the process of the above-mentioned paper, and the solids are in the form more suitable for disposal.

The contactor is preferably that described in U.S. Patent No. 3,649,209. In addition, it is preferred to operate the contactor co-currently, with the two phases entering and leaving the contactor at the same ends. By operating the contactor cocurrently it is ensured that, when operated on metal hydroxide sludge, the acidity of the aqueous phase drops sufficiently during its transit through the contactor to achieve high efficiency extraction.

Other related contactors that may be employed are described in British patent specifications Nos. 860,880, 972,035 and 1037573.

The characteristics required of the extractant are:

1. an extractant activity both at neutral and weakly acid pH's and at the final acidity (usually about pH2)

2. a selectivity for the metal

3. solubility in the organic diluent, and

4. insolubility in water.

The preferred class of extractants is the acid alkyl

8

phosphates and particularly those containing 4 to 10 carbon atoms in the lower alkyl group. Such compounds are well known in the prior art and many are commercially available and particularly include mono- and di-n-butyl; iso-amyl; mono- and di-iso-octyl, including di-(2-ethylhexyl), phosphoric acids and mixtures thereof. Where the metal is aluminium, magnesium or iron, as encountered in the treatment of sludge from water treatment plants using coagulants, it is preferred to use di-(2-ethylhexyl) phosphoric acid or di-(2-ethylhexyl) pyrophosphate. The former may be admixed with mono-(2-ethylhexyl) phosphoric acid.

Although the acid alkyl phosphates are preferred, other ion-exchange extractants can be used in this invention provided they have the characteristics listed above.

The water immiscible diluents include the petroleum solvents including kerosene and naphtha and the like in which the extractant is soluble. The organic solvents should have a high flash point, be non-toxic and be liquid at the temperatures used for the processing, usually ambient room temperatures.

Stripping and regeneration may be performed by a strong acid such as sulphuric acid, the stripped metal ion then appearing as the metal sulphate. The raffinate is treated to separate the metal-free water from the residual solids which are directed respectively to waste and landfill. When the invention is used to treat alum-coagulated sludge and sulphuric acid is used for regenerating the extractant, liquid alum is produced and can be reused in the coagulation process. However, hydrochloric acid may be employed instead, to produce aluminium chloride which can be sold commercially.

Where the sludge is produced as a result of aluminium sulphate coagulation treatment of potable water, the aqueous phase may consist of a floc containing aluminium hydroxide and between about 0.5 to 12% solids by weight and having a pH between about 4 and 8.

The invention will be more readily understood by way of example from the following description of a process for the extraction of a metal ion from an aqueous slurry, reference being made to the accompanying drawings, in which

Figure 1 is a schematic flow diagram particularly illustrating liquid ion exchange extraction of aluminium ions directly from an aqueous slurry containing a floc of insoluble aluminium hydroxide using an organic solvent containing an acid alkyl phosphate as extractant.

Figure 2 shows schematically in axial section the contactor used in Figure 1.

Figure 3 is a graph showing hours of operation as a function of various operating parameters as set forth in Example 8.

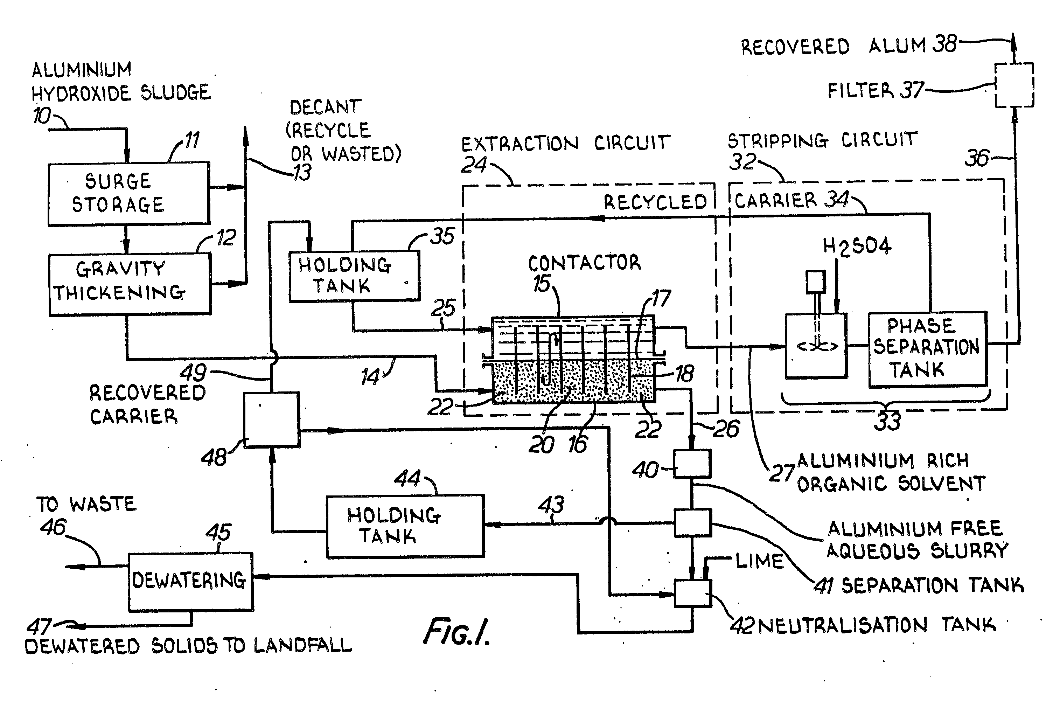

Figure 1 is a process flow diagram for elimination of floc and the recovery of alum from aluminium hydroxide sludges produced by a potable water supply treatment plant.

An aqueous slurry stream 10 containing an aluminium hydroxide floc comes from a water supply treatment plant as the underflow from the plant sedimentation basins and/or filter backwash. This stream 10 of flocculated sludge is fed into a surge storage facility 11 such as a large basin or lagoon. Sludge settling may take place in this facility 11 or its contents can be mixed for a continuous flow influent to a gravity thickening facility 12. The surge storage 11 and thickening 12 are optional depending upon particular plant. Overflow 13 from the settling and/or thickening facility 12 may be recycled to the plant raw water supply, discharged to a water course, or disposed of in a sanitary sewer. The thickened sludge at a solids concentration ranging from 0.5 to 12 percent, depending on the characteristics of the particular sludge, is the influent 14 to the alum recovery process.

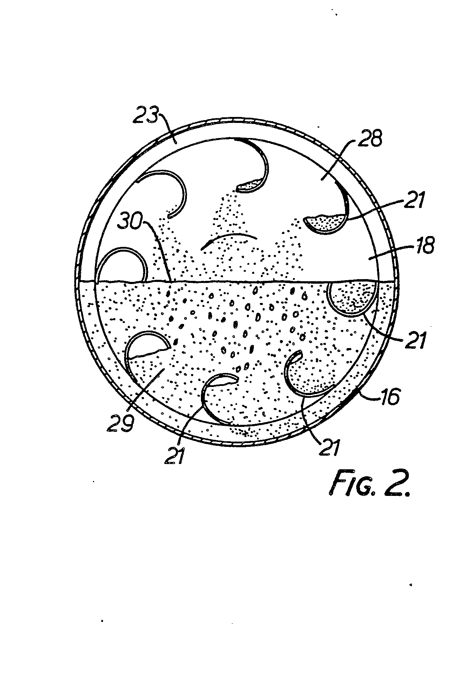

Ion exchange occurs in a contactor 15. This contactor is generally as described in U.S. Patent No. 2,649,209, As illustrated in Figures 1 and 2, the contactor comprises a stationary drum 16, which has a near-horizontal axis, and in which rotates a rotor consisting of a shaft 17 carrying a series of discs 18 which separate the interior of the drum 16 into a sequence of compartments 20. In each compartment 20, there is a ring of buckets 21, carried by the discs 18 and extending across the compartment. Those

11

buckets rotate with the shaft 17 and discs 18, to cause intermingling of the two phases passing through the contactor. The end compartments 22 do not have buckets 21. As shown in Figure 1, the discs 18 do not extend entirely to the drum 16, and instead leaves an annular gap 23 (Figure 2) between the edge of each disc and the drum for the passage of the phases to the drum. Although Figure 1 shows a contactor having only six discs 18, and five compartments disregarding the end compartments, it is to be understood that in practice a larger number of compartments are employed, the actual number depending on the parameters of the process.

Contactor 15 constitutes the extraction circuit 24 of the process. The flocculated sludge on line 14 is pumped to an inlet port in the lower part of one end of the contactor 15 while the organic solvent is supplied on line 25 to an inlet in the upper part of the same end of the contactor, which thus operates in co-current. The flocculated sludge stream on line 14 and the organic solvent on line 25 constitute the aqueous phase and the organic phase, respectively, of the contactor, which are separately discharged at the other end of the contactor through lines 26 and 27 respectively. The two streams pass through the contactor as discrete phases, the rotor of the contactor being turned at a slow speed of a few revolutions per minute in order to avoid the vigorous intermixing that takes place in a mixer settler. Thus, as shown in Figure 2, the organic and aqueous phases indicated respectively at 28 and 29 form a stable interface 30, which is usually located on the axis of the contactor. The phases move from compartment to compartment via the annular gaps 23 and, in each compartment, are subject to gentle intermingling by the rotary action of the buckets 21; as the rotor turns, the buckets raise aqueous phase into the organic phase 28 and shower the latter into the former, the discharge from each bucket being distributed over the arcuate path of the buckets and the droplets of the aqueous phase returning through the organic phase back to the aqueous phase 29. Similarly, on the descent of each bucket, organic phase is taken down and released into the aqueous phase as droplets which return to the organic phase 28. This gentle intermingling of the phases occurs in each compartment 20 and the phases are thus subject to multi-stage contacting. As each phase moves through the other phase in droplet form, the area of contact between the two phases is large and the contacting process is therefore enhanced. In the final compartment 22, the two phases settle out completely, so that, when discharged on lines 26 and 27 each phase contains little of the other phase.

The organic solvent consists of a selective extractant dissolved in an organic diluent. As the two phases move through the contactor 15, a hydrogen ion of the extractant is exchanged for an aluminium ion of the aqueous sludge. The aluminium hydroxide of the entering sludge is of course

13

water-insoluble. It is believed that the ion exchange process operates by virtue of the minimal solubility that normally insoluble compounds have and the resulting presence of aluminium ions in aqueous solution to a minor extent. Then, when the extractant is first brought into contact with the aqueous phase, those aluminium ions in solution are captured by the extractant and exchanged for hydrogen ions which are transferred to the aqueous phase. The hydrogen ions lower the pH of the aqueous phase and act to dissolve more of the solid aluminium hydroxide and bring more aluminium ions into solution for capture in turn by the extractant. By the time the aqueous phase has reached the settling chamber 22 the acidity has increased to pH2, substantially all of the aluminium ions have been captured and substantially all the flocculated sludge has been eliminated.

The aluminium-rich organic solvent on line 27 is fed to a stripping circuit 32 constituted by a mixer-settler 33, in which the organic solvent is mixed with concentrated sulphuric acid to strip the aluminium ion from the extractant to form aluminium sulphate, and to regenerate the organic solvent by substituting a hydrogen ion. After the phases separate, the regenerated organic solvent is recycled on line 34 to a holding tank 35, which supplies line 25. Liquid alum separated from the regenerated organic solvent is passed on line 36 through a carbon filter 37 if required and delivered on line 38 for reuse as

J,

14

a potable water coagulant.

The aluminium-depleted aqueous phase on line 26 is fed to a static head tank 40, which controls the rate of discharge from the contactor 15, and thence to a separation tank 41. The raffinate on line 26 consists of a water phase, solids in readily separable form, and a minor proportion of a third phase in the form of a dispersion containing water, fine particles and organic phase. On separation in tank 41, the water and readily separable solids are led to a neutralizing tank 42 which also receives the discharge from a centrifuge 48 and in which neutralization occurs with the addition of lime. The neutralized discharge from tank 42 is passed to a dewatering unit 45 where a proportion of the water is removed and discharged on line 46. The solids are fed on line 47 to disposal by landfill, or other method.

The third phase separating in tank 41 passes on line 43 to holding tank 44 and thence to the centrifuge 48 to recover the organic phase which is returned on line 49 to the solvent holding tank 35.

The use of the contactor 15 in place of a mixer-settler as previously used has advantages which make the process particularly economically viable. The raffinate on line 26 is a slurry, in which the solids are largely in a readily separable form so that they can be separated from the liquids in tank 45. As a consequence, dewatering in unit 45 is considerably facilitated and a

0030067

15

smaller dewatering installation can be used. The third phase on line 43 is relatively small in quantity; indeed, the quantity may be so small that the need for an in-line centrifuge 48 may not arise. Instead of the arrangement shown in Figure 1, the centrifuge discharge can be neutralized separately and sent directly to disposal.

A second contactor may take the place of the mixer-settler 33 of the stripping circuit, if desired.

The following are specific examples of the process. In each of the examples, the contactor 15 had a 4" (10.2 cm) diameter, a length of 39.63" (100.7 cm) and a calculated volume of 8.16 litres.

EXAMPLE I

The aluminium hydroxide-containing coagulated sludge 14 was at approximately pH 6.8 and had a suspended solids concentration of 2%. The aluminium concentration was 1600 mg/l as $Al^{3+}$. The pH of this solution was lowered to approximately 5.0 in order to obtain a raffinate 26 at pH 2.0. At the pH of 5, the aluminium hydroxide was present in insoluble, floc, form.

The sludge was fed to the contactor 15 at a feed flow rate of 6 ml/min. The organic solvent was naphtha containing 20% by volume octyl acid phosphate (approximately 60% di(2-ethylhexyl) phosphoric acid, 40% mono (2-ethylhexyl) phosphoric acid) and 2% tributyl phosphate dissolved therein. The organic solvent flow rate was varied and a satisfactory operating flow rate was

16

12 ml/min (organic phase to aqueous phase flow rate ratio of 2:1). In this manner, the pH of the raffinate 26 was maintained at 2.0 and aluminium ion removal in the extraction circuit 24 was over 90%. All floc was eliminated.

The stripping agent in stripping circuit 32 was 6N $H_2SO_4$ at a flow rate of 0.22 ml/min resulting in a recovered liquid alum solution containing 44,000 mg/l $Al^{3+}$.

Tests were performed on the extraction of aluminium from alum sludges utilizing various extractants. The sludge was obtained from the Shenango Valley Water Treatment Plant, Sharon, PA. and was produced by the addition of alum (aluminium sulphate) to the raw water. The sludge contained 900 mg/l insoluble aluminium at a pH 7.0. The suspended solids concentration was 2%.

## EXAMPLE 2

### di-(2-ethylhexyl) phosphoric acid (DEHPA)

DEHPA was dissolved in a kerosene base diluent (tradename Kermac 627) to a 20% by volume concentration. The resulting organic solvent was contacted with the sludge at an organic to aqueous volume flow ratio of 2:1. The resulting raffinate contained 6 mg/l $Al^{3+}$, or 99% extraction.

17

## EXAMPLE 3

### di-(2-ethylhexyl) pyrophosphate (DEHPyP)

DEHPyP was dissolved in Kermac 627 to a 20% volume concentration. The organic solvent was contacted with the sludge at an organic to aqueous volume flow ratio of 2:1. The resulting raffinate $Al^{3+}$ concentration was 150 mg/1 $Al^{3+}$, or 83% extraction.

Tests were performed on the extraction of various metals in the precipitate form by mono-di (2-ethylhexyl) phosphoric acid (MDEHPA). In all tests the MDEHPA was a dissolved in Kermac 627 to a 10% by volume concentration. In all cases the organic solvent was contacted with aqueous phase at an organic to aqueous flow rate ratio of 2:1 by volume.

## EXAMPLE 4

### Fe (OH)$_3$

Iron sludge was obtained from the Shenango Valley Water Treatment Plant, Sharon, PA. The sludge was produced by the addition of $FeCl_3$ to the raw water.

Initial aqueous pH = 7.4

Soluble Fe concentration = 920 mg/1

Raffinate pH = 1.7

Raffinate Fe = 4.6 mg/1, or 99% extraction.

18

## EXAMPLE 5

### Mg (OH)$_2$

This was a synthetic precipitate prepared in the lab.

Initial aqueous pH = 11.0 (only exists as a

precipitate at high pH)

Initial aqueous Mg = 1000 mg/l

Raffinate pH = 1.7

Raffinate Mg = 100 mg/l, or 90% extraction.


## EXAMPLE 6

### hydroxy aluminium phosphate

This sludge was prepared in the laboratory by precipitating phosphorus with aluminium to simulate alum coagulation in waste water treatment for phosphorus removal.


Initial aqueous pH = 7.0

Initial Al concentration = 1000 mg/l

Raffinate pH = 1.4

Raffinate Al = 0.6 mg/l, or 99% extraction.


## EXAMPLE 7

### Copper salt (probably of the form CuCO$_3$.Cu(OH)$_2$ which is natural malachite).

This precipitate was prepared in the lab to simulate naturally occurring copper carbonate salt. The pH of a copper carbonate solution was raised until precipitation

19

was completed.

    Initial aqueous pH = 10.9

    Initial Cu = 1080 mg/1

    Raffinate pH = 1.3

    Raffinate Cu = 116 mg/1, or 89% extraction.

    Examples 4 to 7 show the use of an acid alkyl phosphate extractant to extract various metals. Iron and magnesium are also used in potable water treatment, hence Examples 4 and 5. Another important application is alum addition in waste water treatment (sewage) for phosphorus removal as in Example 6. Iron is also used in waste water treatment for phosphorus removal as in Example 4. One of the naturally occurring copper salts is malachite. This mineral was made synthetically as shown in Example 7.

## EXAMPLE 8

    In this experiment, an aluminium hydroxide sludge derived from Tampa, Florida, U.S.A. was treated. The extractant and diluent of Example 1 were used.

    The Tampa sludge contained between 750 and 1250 milligrams per litre of $Al^{3+}$, depending upon the sample. The feed suspended, solids concentration varied from 0.3 to 0.6% by weight.

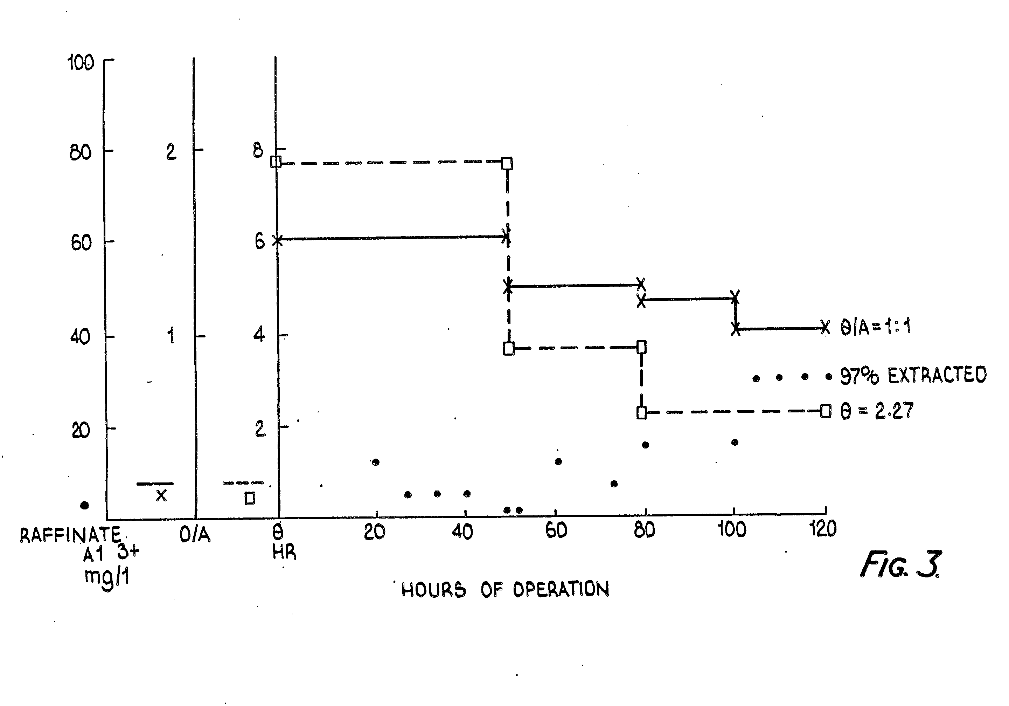

    Figure 3 shows three graphs superimposed as a function of the hours of operation of the contactor 15. The retention time ($\theta$) is the average time the sludge entered on line 14 is retained in the contactor.

The sludge flow 14 was started at a rate corresponding to a 6.8 hour aqueous detention time (Θ). The organic phase 25 to aqueous sludge feed phase 14 volume ratio (O/A) was 1.5:1. The system was operated in this manner for about 50 hours (see Figure 3), well into the range of steady state. After about 20 hours the units settled down and extraction remained above 99% by weight. For the next 30 hours the aqueous detention time (Θ) was lowered to 3.4 hours and the organic/aqueous (O/A) volume ratio lowered to 1.25:1. The percent extraction remained above 98% by weight. Between 80 and 100 hours of operation, the detention time (Θ) was lowered to 2.2 hours and the organic/aqueous (O/A) volume ratio to 1.2:1. Aluminium extraction was maintained at 98% by weight. For the last 20 hours the organic flow rate was lowered to a corresponding organic/aqueous (O/A) flow ratio of 1:1 volume. Aluminium extraction dropped insignificantly to 97% by weight. During these tests the recovered alum was maintained at 43,000 mg/litre $Al^{3+}$ upon removal from the mixer-settler 33 through line 36.

During extraction with the contactor 15, the solids remained in the water phase and were removed from the contactor in the raffinate on line 26. The residual solids in the raffinate tended to settle rapidly.

21

## EXAMPLE 9

The sludge in this example was derived from Sharon, Pennsylvania, U.S.A. and contained 500 to 800 milligrams per litre $Al^{3+}$ at a 1% by weight solids concentration. The extractant and diluent of Example 1 were again used.

The system was started on Sharon sludge using the same extractant and solvent which had already operated on Tampa sludge for 120 hours (Example 8). The system was operated for about 20 hours at the final ratio and holding conditions used for Tampa sludge testing. At the 2.2 hour aqueous detention time and 1.1: by volume organic to aqueous sludge flow rate, the raffinate 26 contained between 6 and 30 mg/litre of $Al^{3+}$.

As in operation on the Tampa sludge, the raffinate on line 26 remaining after aluminium extraction from Sharon sludge contained the residual solids.

22

## CLAIMS

1.  A process for extracting a desired metal ion from an aqueous slurry containing a floc of a substantially water-iinsoluble compound of the metal, in which process extracttion is performed by an organic solvent comprising an acidic cationic extractant dissolved in an organic diluent which is water immiscible, and, after the aqueous slurry has been contacted by the organic solvent and a cation of the exttractant has been exchanged for the metal ion of the slurry, the organic solvent containing the metal ion is separatted and is stripped of the metal ion to regenerate the or_anic solvent

characterised in that extraction of the metal ion from the aqueous slurry to the organic solvent is performed in a continuous contactor through which the aqueous slurry and the organic solvent pass in discrete phases, in which gentle intermingling of the phases occurs during their transit through the contactor, and from which the aqueous and organic phases are discharged separately.

2.  An extraction process according to claim 1, in which the aqueous phase and the solvent phase pass co-currently through the contactor.

3.  An extraction process according to claim 1 or claim 2, in which the metal compound is a metal hydroxide or a hydroxide-containing salt of the metal.

4.    An extraction process according to claim 1 or claim 2, in which the metal compound is aluminium hydroxide, the aqueous phase at entry to the contactor has a pH of at least 4 and on discharge from the contactor has a pH of about 2.

5.    An extraction process according to claim 1 or claim 2, in which the metal compound is a metal hydroxide and the slurry is formed in the treatment of water with a salt of the metal.

6.    An extraction process according to claim 5, in which the metal is iron or magnesium.

7.    An extraction process according to claim 5, in which the slurry has a solids content of between 0.5 and 12%.

8.    An extraction process according to claim 1 or claim 2, in which the metal compound is hydroxy aluminium phosphate formed in phosphate removal of waste-water.

9.    An extraction process according to claim 1 or claim 2, in which the metal compound is a copper compound.

10.    An extraction process according to claim 9, in which the copper compound is naturally occurring copper carbonate.

11. An extraction process according to any one of the preceding claims, in which the extractant is an acid alkyl phosphate.

12. An extraction process according to claim 11, in which the acid alkyl phosphate has between 4 and 10 carbon atoms in the lower alkyl group.

13. An extraction process according to claim 12, in which the acid alkyl phosphate is di-(2-ethylhexyl) phosphoric acid.

14. An extraction process according to claim 13, in which the di-(2-ethylhexyl) phosphoric acid is in admixture with mono-(2-ethylhexyl) phosphoric acid.

15. An extraction process according to claim 12, in which the acid alkyl phosphate is di-(2-ethylhexyl) pyrophosphoric acid.

16. An extraction process according to any one of the preceding claims, in which the aqueous phase discharged from the contactor is separated into solids, water, and a third phase containing solids, water and organic solvent, and the third phase is treated to recover the organic solvent.

17.   An extraction process according to any one of the preceding claims, in which the regenerated organic solvent is recycled.

18.   An extraction process according to any one of the preceding claims, in which the metal compound is aluminium hydroxide and stripping is effected with sulphuric acid to produce aluminium sulphate.

CLAIMS

1.  A process for extracting a desired metal ion from an aqueous slurry containing a floc of a substantially water-insoluble compound of the metal, in which process extraction is performed by an organic solvent comprising an acidic cationic extractant dissolved in an organic diluent which is water immiscible, and, after the aqueous slurry has been contacted by the organic solvent and metal-containing ions have been transferred to the organic solvent, the organic solvent containing the metal-containing ions is separated and is stripped of the metal to regenerate the organic solvent

characterised in that extraction of the metal from the aqueous slurry to the organic solvent is performed in a continuous contactor through which the aqueous slurry and the organic solvent pass in discrete phases, in which gentle intermingling of the phases occurs during their transit through the contactor, and from which the aqueous and organic phases are discharged separately.

2.  An extraction process according to claim 1, in which the aqueous phase and the solvent phase pass co-currently through the contactor.

3.  An extraction process according to claim 1 or claim 2, in which the metal compound is a metal hydroxide or a

AMENDED CLAIMS

hydroxide-containing salt of the metal.

4. An extraction process according to claim 1 or claim 2, in which the metal compound is aluminium hydroxide, the aqueous phase at entry to the contactor has a pH of at least 4 and on discharge from the contactor has a pH of at least 2.

5. An extraction process according to claim 1 or claim 2, in which the metal compound is a metal hydroxide and the slurry is formed in the treatment of water with a salt of the metal.

6. An extraction process according to claim 5, in which the metal is iron or magnesium.

7. An extraction process according to claim 5, in which the slurry has a solids content of between 0.5 and 12%.

8. An extraction process according to claim 1 or claim 2, in which the metal compound is hydroxy aluminium phosphate formed in phosphate removal of waste-water.

9. An extraction process according to claim 1 or claim 2, in which the metal compound is a copper compound.

10. An extraction process according to claim 9, in which

Fig.1.

ALUMINIUM HYDROXIDE SLUDGE 10

SURGE STORAGE 11

GRAVITY THICKENING 12

DECANT (RECYCLE OR WASTED) 13

HOLDING TANK 35

EXTRACTION CIRCUIT 24

STRIPPING CIRCUIT 32

RECYCLED | CARRIER 34

RECOVERED ALUM 38

FILTER 37

36

H2SO4

CONTACTOR 15

17

25

14

22

20 16 22

18

26

PHASE SEPARATION TANK

33

27 ALUMINIUM RICH ORGANIC SOLVENT

RECOVERED CARRIER 49

48

40

41 SEPARATION TANK

ALUMINIUM FREE AQUEOUS SLURRY

HOLDING TANK 44

43

LIME

42 NEUTRALISATION TANK

TO WASTE 46

DEWATERING 45

47 DEWATERED SOLIDS TO LANDFALL

0030067

1/3

FIG. 2.

HOURS OF OPERATION

FIG. 3.

0030067

# EUROPEAN SEARCH REPORT

**European Patent Office**

Application number

EP 80 30 1007.3

## DOCUMENTS CONSIDERED TO·BE RELEVANT

| Category | Citation of document with indication, where appropriate, of relevant passages | Relevant to claim |
|---|---|---|
| | US - A - 4 010 099 (CONTINENTAL OIL)<br>* column 1, lines 53 to 62 *<br>--- | 1 |
| | AT - B - 345 565 (G. THORSEN)<br>* claims 1, 4; fig. 1 *<br>--- | 1,6,9,<br>11-13,<br>16,17 |
| | DE - A1 - 2 601 471 (BAYER)<br>* claims 1, 3; page 6, paragraphs 2,3 *<br>--- | 1 |
| | DE - A1 - 2 645 130 (E. DIAZ NOGUEIRA et al.)<br>* claim 1, page 12, paragraph 7 *<br>--- | 1,6,<br>11-13,<br>17 |
| | DE - A1 - 2 710 267 (MINERAL AND CHEMI-CAL RESOURCE et al.)<br>* claims 1, 7; page 14, paragraph 2 *<br>--- | 1,11-<br>13,17 |
| D | US - A - 3 649 209 (R. GRAESSER LTD.)<br>* fig. 1, 2 *<br>--- | 1 |
| A | DE - A - 2 161 550 (NATIONAL INSTITUTE FOR METALLURGY et al.)<br>* page 9, paragraph 2; fig. * | |
| A | DE - A - 2 311 242 (ANACONDA)<br>* claim 9; page 22, paragraph 1; fig. 1 to 3 *<br>---- | |

.(..

**CLASSIFICATION OF THE APPLICATION (Int. Cl 3)**

B 01 D 11/02

**TECHNICAL FIELDS SEARCHED (Int. Cl.3)**

B 01 D 11/00
B 01 D 11/02
C 02 F 1/26
C 22 B 3/00
C 22 B 3/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family.
corresponding document

X The present search report has been drawn up for all claims

| Place of search | Date of completion of the search | Examiner |
|---|---|---|
| Berlin | 09-03-1981 | KÜHN |

EPO Form 1503.1 06.78

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | <u>FR - A - 1 220 787</u> (H. IVEKOVIC) <br> * complete document * <br> -- | | |
| A | INDUSTRIAL AND ENGINEERING CHEMISTRY, Vol. 53, No. 10, October 1961. R.B. LONG et al. "Scale-up of a Novel Mixer-Settler Extractor" pages 791 to 798 * page 791 * <br> ---- | | TECHNICAL FIELDS SEARCHED (Int. Cl.³) |